# EUROPEAN PATENT APPLICATION

(11) **EP 1 683 979 A2**
(43) Date of publication of application: **26.07.2006**
(21) Application number: 05113045.8
(22) Date of filing: 28.12.2005
(51) Int. Cl.: F16D 1/068

(54) **Method of manufacturing a combined driveshaft tube and yoke assembly**

(30) Priority: 30.12.2004 US 640298
(71) Applicant: DANA CORPORATION, Toledo, OH 43615 (US)
(72) Inventor: Durand, Robert D., Lancaster, Pennsylvania 17601-4103 (US); Perry Daniel C., Temperance, Michigan 48182 (US)
(74) Representative: Franzolin, Luigi

(57) **Abstract**

A method for manufacturing an assembly of first and second components, such as an end fitting (20) and a driveshaft tube (16) for use in a vehicular drive train system (10). Initially, a yoke is provided including a body (21) having a recess (21a) provided therein and a pair of yoke arms (22,23). The recess defines an inner body portion (21b) and an outer body portion (21c) in the yoke. A portion of a driveshaft tube inserted within the recess between the inner body portion and the outer body portion. If desired, one or more retaining structures or an adhesive material may be provided on either or both of the driveshaft tube or the yoke. Then, a magnetic pulse forming process is performed to deform the outer body portion of the body of the yoke into engagement with the portion of the driveshaft tube to provide a combined driveshaft tube and yoke assembly.

## Description

### BACKGROUND OF THE INVENTION

This invention relates in general to drive train systems for transferring rotational power from a source of rotational power to a rotatably driven mechanism. In particular, this invention relates to an improved method for manufacturing a combined driveshaft tube and yoke assembly for use in such a drive train system.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a driveshaft assembly to an input shaft of an axle assembly so as to rotatably drive the wheels of the vehicle. To accomplish this, a typical driveshaft assembly includes a hollow cylindrical driveshaft tube having a pair of end fittings, such as a pair of tube yokes, secured to the front and rear ends thereof. The front end fitting forms a portion of a front universal joint that connects the output shaft of the engine/transmission assembly to the front end of the driveshaft tube. Similarly, the rear end fitting forms a portion of a rear universal joint that connects the rear end of the driveshaft tube to the input shaft of the axle assembly. The front and rear universal joints provide a rotational driving connection from the output shaft of the engine/transmission assembly through the driveshaft assembly to the input shaft of the axle assembly, while accommodating a limited amount of angular misalignment between the rotational axes of these three shafts.

As mentioned above, a typical driveshaft assembly includes a hollow cylindrical driveshaft tube having a pair of end fittings, such as a pair of tube yokes, secured to the front and rear ends thereof. Traditionally, the tube yokes have been formed by forging or casting and have been secured to the ends of the driveshaft by welding or adhesives. Although this method has been effective, it would be desirable to provide an improved method for manufacturing a combined driveshaft tube and yoke assembly for use in a drive train system.

### SUMMARY OF THE INVENTION

This invention relates to an improved method for manufacturing an assembly of first and second components, such as an end fitting and a driveshaft tube for use in a vehicular drive train system. Initially, a yoke is provided including a body having a recess provided therein and a pair of yoke arms. The recess defines an inner body portion and an outer body portion in the yoke. A portion of a driveshaft tube inserted within the recess between the inner body portion and the outer body portion. If desired, one or more retaining structures or an adhesive material may be provided on either or both of the driveshaft tube or the yoke. Then, a magnetic pulse forming process is performed to deform the outer body portion of the body of the yoke into engagement with the portion of the driveshaft tube to provide a combined driveshaft tube and yoke assembly.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a schematic side elevational view of a drive train system including a combined driveshaft tube and tube yoke assembly manufactured in accordance with the method of this invention.

Fig. 2 is a perspective view of the driveshaft tube and the tube yoke illustrated in Fig. 1 shown prior to assembly.

Fig. 3 is a sectional elevational view of the driveshaft tube and the tube yoke illustrated in Figs. 1 and 2 shown prior to assembly.

Fig. 4 is a sectional elevational view similar to Fig. 3 showing the driveshaft tube and the tube yoke in an initial stage of assembly.

Fig. 5 is a sectional elevational view similar to Fig. 4 showing the driveshaft tube and the tube yoke in a final stage of assembly.

### DETAILED DESCRIPTION OF THE PREFERRED EMBODIMENT

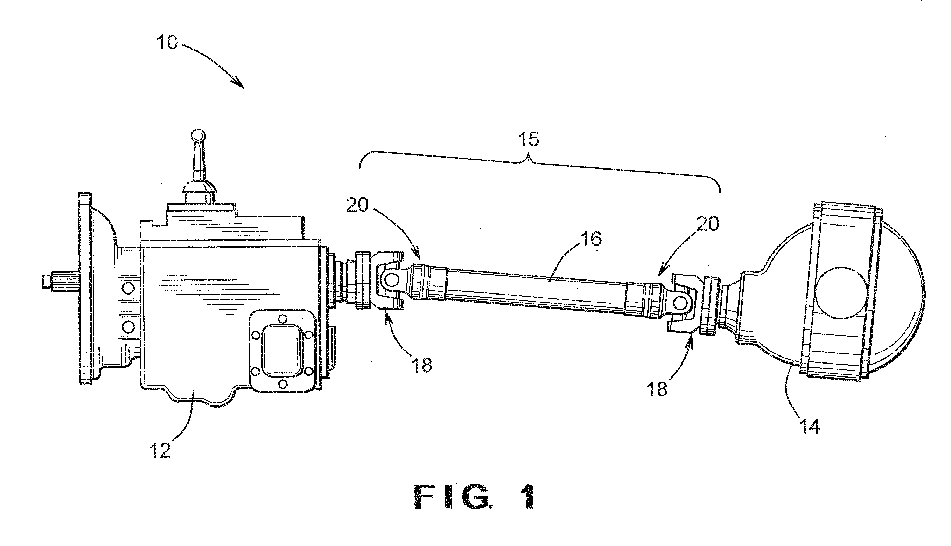

Referring now to the drawings, there is illustrated in Fig. 1 a drive train system, indicated generally at 10, for transferring rotational power from a source to a driven device. The illustrated vehicle drive train system 10 is conventional in the art and is intended merely to illustrate one environment in which this invention may be used. Thus, the scope of this invention is not intended to be limited for use with the specific structure for the vehicle drive train system 10 illustrated in Fig. 1 or with vehicle drive train systems in general. On the contrary, as will become apparent below, this invention may be used in any desired environment for the purposes described below.

The illustrated vehicle drive train system 10 includes a transmission 12 having an output shaft (not shown) that is connected to an input shaft (not shown) of an axle assembly 14 by a driveshaft assembly 15. The driveshaft assembly 15 includes a hollow cylindrical driveshaft tube 16 that extends from a front end adjacent to the transmission 12 to a rear end adjacent to the axle assembly 14. The drive train system 10 further includes a pair of universal joints, each indicated generally at 18, for rotatably connecting the output shaft of the transmission 12 to the front end of the driveshaft assembly 15 and for rotatably connecting the rear end of the driveshaft assembly 15 to the input shaft of the axle assembly 14. An end fitting 20, such as the illustrated tube yoke, is provided at the front end of the driveshaft tube 16 and forms a portion of the front universal joint 18. A similar end fitting 20, such as the illustrated tube yoke, is provided at the rear end of the driveshaft tube 16 and forms a portion of the rear universal joint 18. The end fittings 20 are secured to the ends of the driveshaft tube 16 in the manner described below. Although the illustrated end fittings 20 are tube yokes, it will be appreciated that such end fittings 20 are intended to be representative of any desired structure or structures that are desired to be secured to the ends of the driveshaft tube 16.

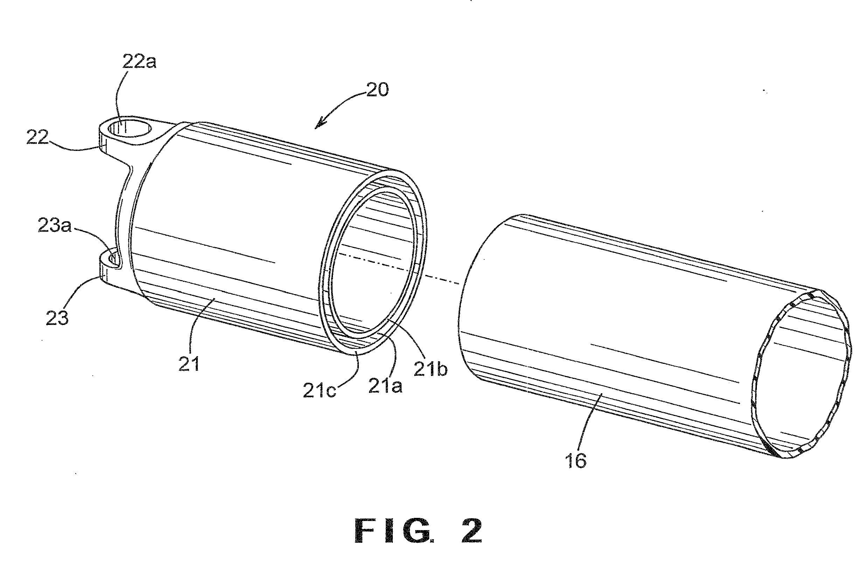

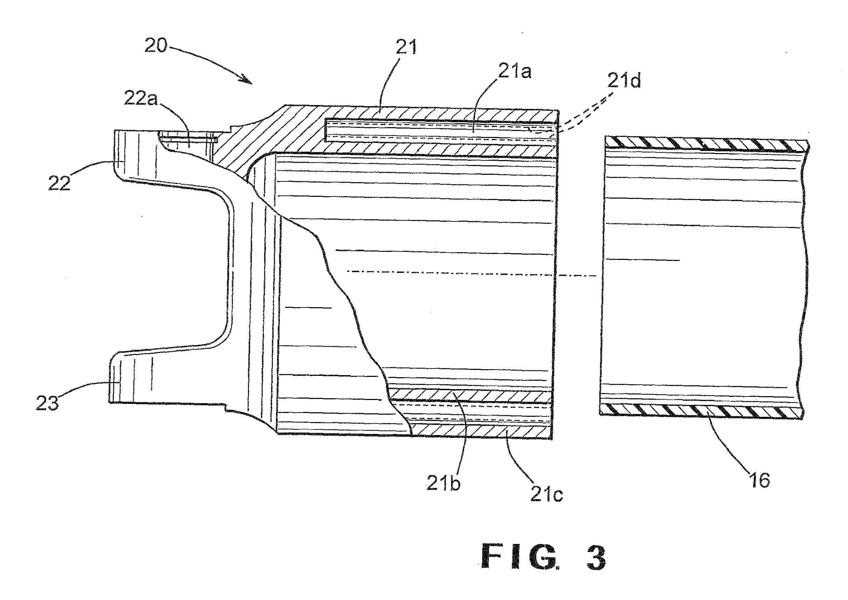

The structure of one of the end fittings 20 and method of assembling it to the driveshaft tube 16 is illustrated in detail in Figs. 2 through 5. As shown in Figs. 2 and 3, the end fitting 20 is formed from a metallic material and includes a body 21 having a pair of opposed yoke arms 22 and 23. The body 21 is generally hollow and cylindrical in shape and has an annular recess 21a provided in a first end thereof. The annular recess 21a thus defines an inner body portion 21b and an outer body portion 21c on the end fitting 20. The recess 21a can be formed in the body portion 21 of the end fitting 20 in any desired manner. The yoke arms 22 and 23 extend generally axially from a second end of the body 21 and have respective openings 22a and 23a formed therethrough. The openings 22a and 23a are preferably co-axially aligned with one another and are adapted to receive respective bearing cups (not shown) that are supported on a pair of trunnions of a universal joint cross for the front universal joint 18 in a conventional manner.

In the preferred embodiment, the driveshaft tube 16 is formed from a composite material, such as disclosed in U.S. Patent Nos. 5,127,975 and 5,261,991, both of which are owned by the assignee of this application. The disclosures of such patents are incorporated herein by reference. Alternatively, the driveshaft tube 16 may be formed from a metallic material that is either the same as or different from the metallic material used to form the end fitting 20. For example, the end fitting 20 may be formed from either a steel alloy material or an aluminum alloy material, while the driveshaft tube 16 may be formed from an aluminum alloy material or a magnesium alloy material. However, this invention contemplates that the driveshaft tube 16 may be formed from any desired material or combination of materials.

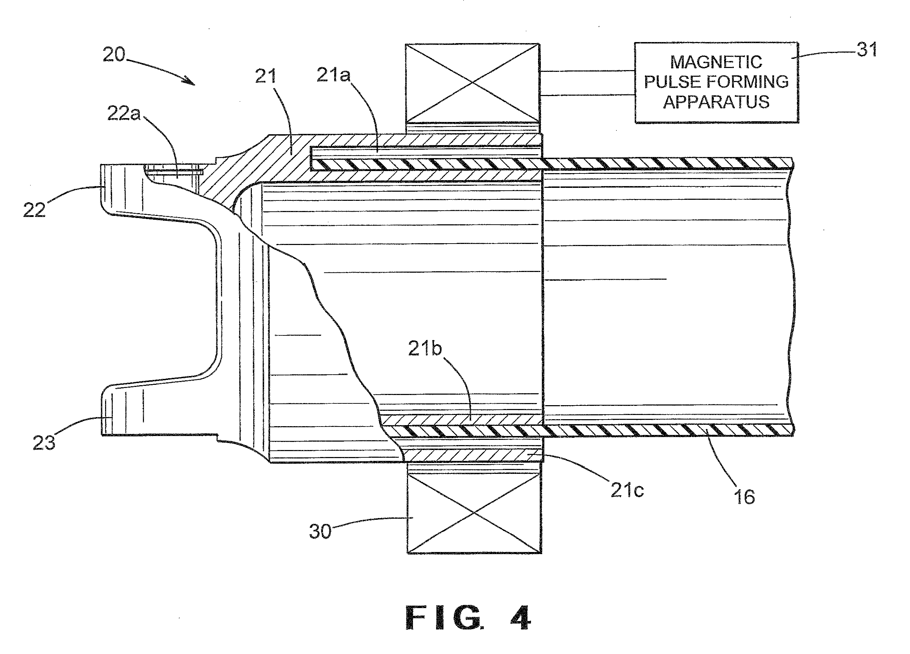

Figs. 2 and 3 show the end fitting 20 and the driveshaft tube 16 prior to assembly. As shown therein, the end fitting 20 and the driveshaft tube 16 are initially co-axially aligned with one another such that the end of the driveshaft tube 16 is located adjacent to the recess 21a. Then, the driveshaft tube 16 is moved axially toward the end fitting 20 such that the end of the driveshaft tube 16 is inserted within the recess 21a, as shown in Fig. 4. If desired, the driveshaft tube 16 can be inserted within the recess 21a until the end of the driveshaft tube 16 engages the bottom of the recess 21a, although such is not required. Thus, the end of the driveshaft tube 16 is received between the inner body portion 21b and the outer body portion 21c of the body 21 of the end fitting 20.

To facilitate the insertion of the end of the driveshaft tube 16 within the recess 21a, it is desirable that the recess 21a be sized to easily accommodate the end of the driveshaft tube 16 therein with a certain amount of clearance. To accomplish this, it is desirable that the outer surface of the inner body portion 21b define an outer diameter that is smaller than an inner diameter defined by the inner surface of the driveshaft tube 16, and further that the outer surface of the driveshaft tube 16 define an outer diameter that is smaller than an inner diameter defined by the inner circumferential surface of the outer body portion 21c. Preferably, as shown in Fig. 4, the outer diameter defined by the outer surface of the inner body portion 21b is only slightly smaller than the inner diameter defined by the inner surface of the driveshaft tube 16. This allows the driveshaft tube 16 to be positively positioned in a co-axial relationship with the end fitting 20. Preferably, however, as also shown in Fig. 4, the outer diameter defined by the outer surface of the driveshaft tube 16 is significantly smaller than the inner diameter defined by the inner surface of the outer body portion 21c. This provides an annular gap between the outer surface of the driveshaft tube 16 and the inner surface of the outer body portion 21c of the end fitting 20. The purpose for this annular gap will explained below.

Next, an inductor coil 30 of a magnetic pulse forming apparatus 31 is disposed about the axially overlapping portions of the driveshaft tube 16 and the end fitting 20, as also shown in Fig. 4. The inductor coil 30 and the magnetic pulse forming apparatus 31 are conventional in the art and can be embodied as any desired apparatuses for generating an electromagnetic field to deform the outer body portion 21c of the end fitting 20 into engagement with the driveshaft tube 16 in the manner described in detail below.

Magnetic pulse forming is a well known process that can be used to deform a metallic workpiece to a desired shape. Typically, a magnetic pulse forming process is performed by initially disposing a portion of a workpiece in an axially overlapping relationship with a mandrel or other workpiece having a surface that defines a desired shape. An electromagnetic field is generated either within or about the workpiece. When this occurs, a large pressure is exerted on the workpiece, causing it to move toward the mandrel or other workpiece. If the electromagnetic field is generated about the exterior of the workpiece, then the workpiece is deformed inwardly into engagement with the mandrel or other workpiece. If, on the other hand, the electromagnetic field is generated within the interior of the workpiece, then the workpiece is deformed outwardly into engagement with the mandrel or other workpiece.

The inductor 30 is provided to generate the electromagnetic field. The inductor 30 is typically embodied as an electrical conductor that is wound into a coil and is positioned either about the exterior of the workpiece or within the interior of the workpiece. The inductor 30 is selectively connected by a switch through a pair of electrical conductors to a power supply. The power supply usually includes a source of electrical power that is connected a plurality of capacitors. The source of electrical power is initially connected to the plurality of capacitors so as to charge them to a predetermined voltage. Thereafter, when it is desired to perform the magnetic pulse forming process, the switch is closed so as to connect the plurality of capacitors through the pair of electrical conductors to the inductor 30 in a closed electrical circuit. When this occurs, a high magnitude pulse of electrical current is passed from the plurality of capacitors through the pair of electrical conductors and the inductor 30. As a result, the inductor 30 generates the electromagnetic field either about or within the workpiece (depending upon where the inductor 30 is positioned) to perform the magnetic pulse forming process. After the capacitors have been discharged, the switch is opened to allow the source of electrical power to recharge the plurality of capacitors to the predetermined voltage in anticipation of the performance of the next magnetic pulse forming or welding process.

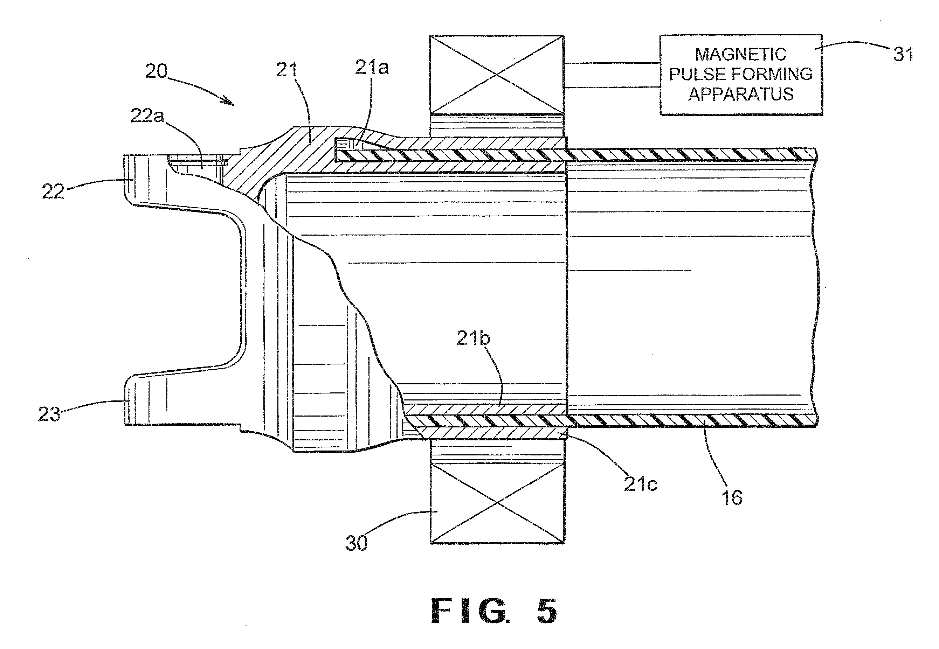

Fig. 5 shows the driveshaft tube 16 and the end fitting 20 in a final stage of assembly, after the completion of the magnetic pulse forming process. As shown therein, the operation of the magnetic pulse forming apparatus 31 causes the inductor 30 to generate the electromagnetic field about the outer body portion 21c of the tube yoke 21. As a result, the outer body portion 21c of the end fitting 20 is deformed inwardly into engagement with the outer surface of the end of the driveshaft tube 16 disposed within the recess 21a. During this deformation, the end of the driveshaft tube 16 is supported on the inner body portion 21b of the end fitting 20 so as to be maintained co-axially relative thereto. At the same time, the inner body portion 21b of the end fitting 20 supports the end of the driveshaft tube 16 to prevent damage from occurring thereto as a result of the impact by the outer body portion 21c of the end fitting 20.

The magnetic pulse forming process causes the end of the driveshaft tube 16 to be positively engaged between the inner body portion 21b and the outer body portion 21c of the end fitting 20. If desired, a quantity of adhesive, such as schematically shown in dotted lines at 21d in Fig. 3, may be provided on either (or both) of the body portions 21b and 21c of the end fitting 21 or on the inner or outer surfaces of the driveshaft tube prior to the performance of the magnetic pulse forming process. Thus, in the illustrated embodiment, when the outer body portion 21c of the end fitting 20 is deformed inwardly into engagement with the end of the driveshaft tube 16, the adhesive engages both the outer body portion 21c of the end fitting 20 and the driveshaft tube 16, thus creating an adhesive bond therebetween. Also, if desired, one or more retaining structures, such as also schematically shown in dotted lines at 21d in Fig. 3, may be provided on either (or both) of the body portions 21b and 21c of the end fitting 21 or on the inner or outer surfaces of the driveshaft tube prior to the performance of the magnetic pulse forming process. Such retaining structures can include, for example, axially extending splines or other protrusions. In the illustrated embodiment, when the outer body portion 21c of the end fitting 20 is deformed inwardly into engagement with the end of the driveshaft tube 16, a positive connection is created therebetween.

In an alternative embodiment, the recess 21a may be formed in the end fitting 20 in such a manner as to eliminate the inner body portion 21b, thus providing only the outer body portion 21c. In this instance, the end of the driveshaft tube 16 would not be supported on the inner body portion 21b during the magnetic pulse forming process. Similarly, the recess 21a may be formed in the end fitting 20 in such a manner as to eliminate the outer body portion 21c, thus providing only the inner body portion 21b. In this instance, the end of the driveshaft tube 16 would not be supported on the outer body portion 21c during the magnetic pulse forming process.

Furthermore, if the driveshaft tube 16 was formed from a metallic material, the recess 21a could be formed in the end of the driveshaft tube 16 instead of the end fitting 20. This would allow a portion of the body portion 21 of the end fitting 20 to be inserted within such a recess for securement to the driveshaft tube 16 in a similar manner. Lastly, if both the driveshaft tube 16 and the end fitting 20 are formed from metallic materials, then the magnetic pulse forming apparatus 31 can be operated to perform a magnetic pulse welding process therebetween, instead of merely performed a magnetic pulse forming process.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method for manufacturing an assembly of first and second components comprising the steps of:
(a) providing a first component having a recess provided therein;
(b) disposing a portion of a second component within the recess provided in the first component; and
(c) performing a magnetic pulse forming or welding process to deform a portion of the first component into engagement with a portion of the second component to provide an assembly.

2. The method defined in Claim 1 wherein said step (a) is performed by providing the first component with a recess that defines an inner body portion, said step (b) is performed by inserting the portion of the second component about the inner body portion, and said step (c) is performed by deforming the inner body portion of the first component outwardly into engagement with the portion of the second component.

3. The method defined in Claim 1 wherein said step (a) is performed by providing the first component with a recess that defines an outer body portion, said step (b) is performed by inserting the portion of the second component within the outer body portion, and said step (c) is performed by deforming the outer body portion of the first component inwardly into engagement with the portion of the second component.

4. The method defined in Claim 1 wherein said step (a) is performed by providing the first component with a recess that defines an inner body portion and outer an body portion, said step (b) is performed by inserting the portion of the second component between the inner body portion and the outer body portion, and said step (c) is performed by deforming at least one of the inner body portion and the outer body portion of the first component into engagement with the portion of the second component.

5. The method defined in Claim 4 wherein said step (b) is performed by supporting the portion of the second component on one of the inner body portion and the outer body portion of the first component, and said step (c) is performed by deforming the other of the inner body portion and the outer body portion of the first component into engagement with the portion of the second component.

6. The method defined in Claim 1 wherein said step (a) is performed by providing an adhesive in the recess provided on the first component, and said step (c) is performed by deforming the portion of the first component into engagement with the adhesive and the portion of the second component.

7. The method defined in Claim 1 wherein said step (a) is performed by providing a retaining structure in the recess provided on the first component, and said step (c) is performed by deforming the portion of the first component into engagement with the retaining structure and the portion of the second component.

8. The method defined in Claim 1 wherein said step (a) is performed by providing a first component that is formed from a metallic material and said step (b) is performed by providing a second component that is formed from a metallic material.

9. The method defined in Claim 1 wherein said step (a) is performed by providing a first component that is formed from a metallic material and said step (b) is performed by providing a second component that is formed from a composite material.

10. The method defined in Claim 1 wherein said step (a) is performed by providing an end fitting for a driveshaft assembly and said step (b) is performed by providing a driveshaft tube for a driveshaft assembly.
